# EUROPEAN PATENT SPECIFICATION

(11) **EP 0 615 958 B1**
(45) Date of publication and mention of the grant of the patent: **20.08.1997**
(21) Application number: 94104228.5
(22) Date of filing: 17.03.1994
(51) Int. Cl.: C03B 9/193

(54) **A punch assembly for a machine for shaping glass articles**
Plungervorrichtung für eine Maschine zum Formen von Glasgegenständen
Assemblement de poinçon pour une machine de fabrication d'objets en verre

(30) Priority: 19.03.1993 IT TO930191
(43) Date of publication of application: 21.09.1994
(73) Proprietor: BOTTERO S.p.A., I-12010 Roata Canale (Cuneo) (IT)
(72) Inventor: Armando, Lorenzo, I-12100 Cuneo (IT); Basso, Gianpiero, I-12081 Beinette (IT); Simondi, Carlo, I-12100 Cuneo (IT)
(74) Representative: Jorio, Paolo, Dr. Ing.

(56) References cited:
- US-A- 2 702 444

## Description

The present invention relates to a punch or also known as plunger assembly for a machine for shaping or forming articles of glass.

Forming machines are usually used in the glass industry and are adapted to receive gobs of molten glass in succession from a known advancing and cutting assembly and to advance these gobs through a plurality of shaping stations at each of which each gob is shaped progressively to form a specific semi-finished product.

In most applications (see e.g. US-A-2 702 444), a forming machine includes a punch assembly for forming, in succession, a plurality of rough-shaped products each of which has a cavity, and one or more finishing units located downstream of the punch assembly. The punch assembly is located immediately downstream of the advancing and cutting assembly and in turn includes a rough-shaping mould defining at least one cavity for receiving a gob of molten glass and a punch which is associated with the said cavity and is coupled to its own support casing or structure for movement relative to the support structure itself under the action of a respective actuator device towards and away from the cavity between a withdrawn, rest position and an advanced, operative position in which the punch itself extends into the cavity and through the respective gob of molten glass to form the said rough-shaped product.

Obviously, after a variable number of rough-shaped products have been produced, the punch reaches the limit of its usefulness and must, therefore, be replaced. It is known that the punch must be replaced in a relatively short period of time so as not to disturb the production rhythm substantially but above all, to avoid the condition of the mass of molten glass which may be present in the supply and cutting assembly from changing as regards its temperature and, hence, density and creating problems in the renewal of the cycle after the replacement of the punch itself.

For this purpose, the punch assembly normally includes its own fixed frame and a device for connecting the support casing or structure to the fixed frame. The connecting devices known until now include one or more rods each of which has an intermediate portion for bearing against a shoulder carried by the support structure and a threaded end portion which engages a threaded hole in the fixed frame. Such connecting devices, although being simple from a constructional point of view, have the major disadvantage of becoming unreliable after a relatively small number of changes.

The object of the present invention is to provide a punch assembly which enables the problem explained above to be resolved and at the same time is simple and cheap to manufacture and very reliable in operation.

According to the present invention there is provided a punch assembly for a machine for shaping glass articles comprising a fixed support; at least one outer casing having an axis and adapted to support a punch for movement relative to the outer casing in a direction substantially parallel to the said axis; and connecting means for connecting the outer casing releasably to the fixed support; characterised in that the connecting means comprise gripper means carried by one component selected from the fixed support and the outer casing; counter means for the gripper means carried by the other component of the fixed support and the outer casing, the counter means being movable between an operative position in which the counter means cooperate with the gripper means to connect the casing to the fixed support in a releasable manner and a rest position in which the counter means are disengaged from the gripper means; and first drive means for the counter means.

The invention will now be described with reference to the appended drawings which illustrate one non-limitative embodiment, in which:
Figure 1 is a partially-sectioned view with parts removed for clarity showing a preferred embodiment of the punch assembly of the present invention;
Figure 2 is a perspective view of a detail of Figure 1;
Figure 3 is a section taken on the line III-III of Figure 1, on an enlarged scale;
Figure 4 is a plan view of a detail of Figure 2;
Figure 5 is a section taken on the line V-V of Figure 1, on an enlarged scale;
Figure 6 illustrates a variant of a detail of Figure 1 in section and on an enlarged scale; and
Figure 7 illustrates an accessory of the punch assembly of figure 1 partially in section.

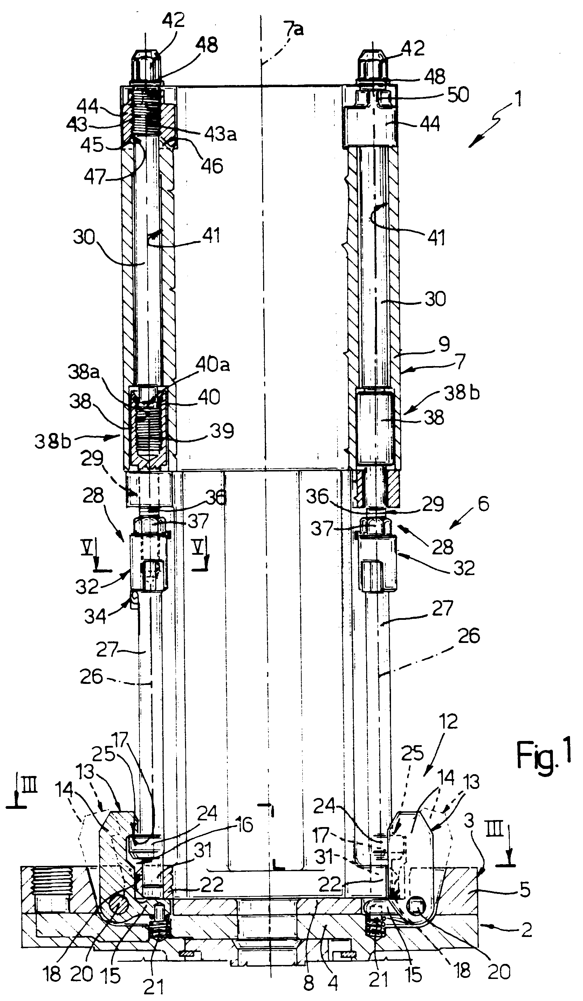

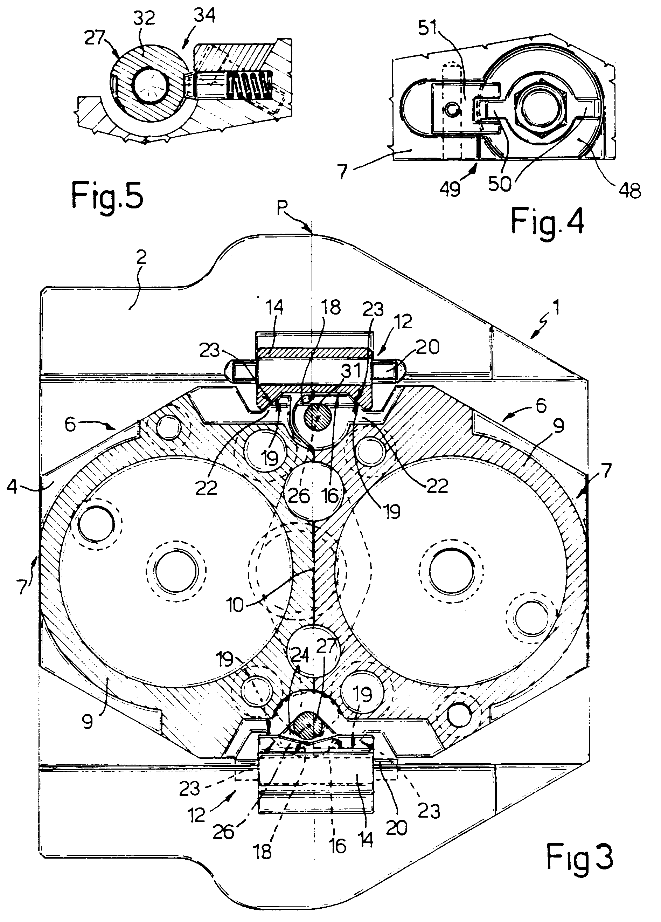

Figures 1 and 3 show a punch assembly 1 for a machine (not illustrated) for forming glass articles (not illustrated).

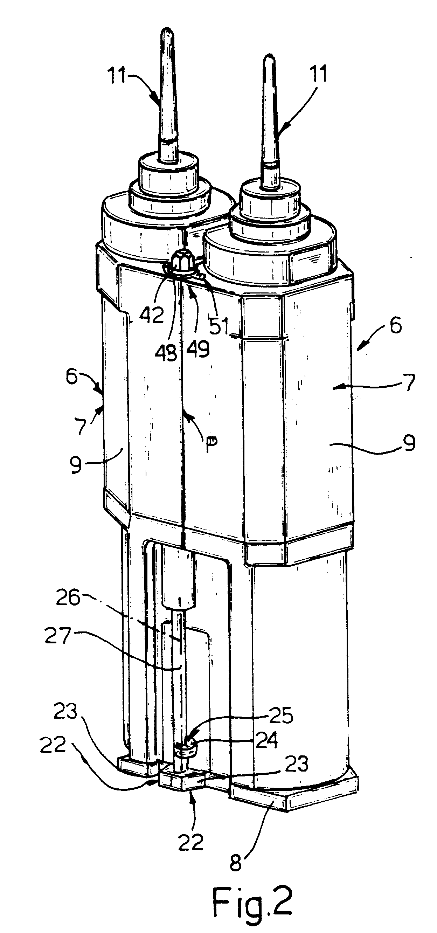

The assembly 1 includes a fixed frame 2 which in turn includes a cup-shaped body 3 defined by a base 4 and a peripheral side wall 5 which projects upwardly from the base 4. As best seen in Figures 2 and 3, the assembly 1 further includes two punch units 6 which are identical to each other and lie side by side in contact with each other at a vertical plane P passing through the cup-shaped body 3, each unit having an outer casing 7, a lower end portion of which is housed within the cup-shaped body 3.

More particularly, each casing 7 is arranged with its axis 7a parallel to the plane P and terminates at its lower end in a flat support plate 8 which contacts the base 4 of the body 3 and is defined laterally by a wall 9 which has a flat surface 10 lying in the plane P on its side facing the other casing 7.

The units 6 each further include a respective punch 11 which is coupled to the respective outer casing 7 and is moveable relative to this casing 7 along the respective axis 7a towards and away from a known forming mould, not illustrated, under the action of a respective actuator which is also known and not visible in the appended drawings. More particularly, each actuator is housed within the respective casing 7 and is arranged to move the respective punch 11 between a withdrawn, rest position and an advanced, operative position in which the punch 11 itself engages a respective chamber (not illustrated) defined by the mould (not illustrated) and projects through a respective gob of molten glass (not illustrated) housed within the chamber itself to convert the said gob into a rough-shaped product (not illustrated) having a respective cavity constituted by the depression left by the respective punch 11.

The assembly 1 further includes a coupling device 12 interposed between the body 3 and the casings 7 for attaching the casings 7 releasably to the frame 2.

More particularly, the device 12 is a rapid coupling-device which, as seen in Figures 1 and 3, comprises a pair of jaws 13 which are located on opposite sides of the casings 7 in positions aligned with the plane P, each jaw comprising a respective L-shaped bracket having first and second arms indicated 14 and 15 of which the arm 15 is shorter than the arm 14. The arms 14 each have a respective recess 16 which faces the respective casing 7, the top of each recess being formed by a flat surface 17 and the periphery by a central flat surface 18 and two flat side surfaces 19 on opposite sides of the central surface 18 itself and converging towards each other and towards the central surface 18. The jaws 13 are each pivoted on the wall 5 of the body 3 by means of respective shaft 20 perpendicular to the plane P for rotation between an open, rest position, illustrated in broken outline in Figure 1, in which the arm 14 contacts an inner surface of the wall 5 and the arm 15 is inclined to the base 4 of the body 3, and a closed, operative position, illustrated in continuous outline in Figure 1, in which the arm 14 is perpendicular to the wall 4 and the arm 15 compresses a respective return spring 21 housed within a respective seat formed in the base 4 itself.

When the jaws 13 are in their closed, operative positions, a lower part of each recess 16 is engaged by a pair of adjacent appendages 22 which are integral each with a respective plate 8 of a respective one of the casings 7, a side of each appendage being defined by a respective inclined surface 23 which extends in contact with a respective one of the surfaces 19 of the respective recess 16.

Again, when the jaws 13 are in their closed operative positions, the parts of the recesses 16 which are not engaged by the appendages 22 are engaged each by a respective circular segment 24 the top of which is defined by a flat surface 25 parallel to the respective surface 17 of the recess 16, each segment 24 being rotable about a respective vertical axis 26, parallel to the axes 7a, between an operative position, illustrated in continuous outline in Figure 3, in which the segment 24 projects into the respective recess 16 and is located in such a position that its surface 25 contacts the corresponding surface 17 of the recess 16 itself, and a rest position, illustrated in broken outline in Figure 3, in which the segment 24 is disengaged from its recess 16 and is located adjacent the respective wall 9.

Again with reference to Figure 1, each segment 24 is integral with an intermediate portion of a respective lower shaft 27 which is coaxial with the respective axis 26 and which constitutes part of a drive system 28 for the segments 24, the drive system further including, for each segment 24, an intermediate shaft 29 and an upper shaft 30 aligned with the respective shaft 27 and coaxial with its axis 26. The shafts 27 are each coupled to the respective casing 7 so as to be rotatable about their axes 26 and slidable along their axes 26 and, more particularly, each has a respective lower end portion 31 which engages a hole in a respective appendage 22 so as to be rotatable and axially slidable therein, and an upper end portion 32 which is fixed to the respective shaft 29.

Close to each of the said portions 32 is an angular snap positioning device 34 (Figure 5) of known type adapted to fix the respective shaft 27 releasably in two predetermined angular positions preferably spaced apart by 180° and corresponding to the operative position and to the rest position of the respective segment 24 respectively.

Again with reference to Figure 1, each of the portions 32 has a threaded bore engaged by a lower, threaded end portion 36 of the respective intermediate shaft 29 which is also coupled to the respective casing 7 so as to be rotatable and axially slidable.

Each shaft 29 is fixed to the respective shaft 27 by a drive nut 37 and has an upper end portion 38 which, together with the remaining part of the shaft 29 and the nut 37 constitutes part of a device 38b for connecting the shafts 27 and 30 together and has a threaded bore 38a with right-hand threading engaged by a threaded end portion 39 of the respective shaft 30. Each of the portions 38 also has an internal, circumferential seat formed close to a free end edge of the portion 38 itself which houses a metal ring 40 for cooperating frictionally with a shoulder 40a of the portion 39 to attach the shaft 29 to the shaft 30 so as to be fixed for rotation therewith but releasable therefrom.

Still with reference to Figure 1, each shaft 30 engages a respective axial seat 41 formed in the respective casing 7 so as to be rotatable and axially slidable therein and terminates in an hexagonal head 42 which projects from the respective casing 7 for enabling the segment 24 to be rotated about the respective axis 7a between the said operative and rest positions.

Each shaft 30 has an intermediate portion 43 adjacent the head 42 which is threaded with left-hand threading and has a pitch equal to that of the threading of the portion 39 and which engages a respective threaded through-hole 43a in a body 44 for force clamping the casings 7 against each other. More particularly, the casings 7 have respective upper parts 45 which are adjacent each other and which taper upwardly being defined axially by conical surfaces 46 each coaxial with a respective axis 7a and complementary with a respective conical surface 47 at the lower end of a respective body 44 and adapted to bear against the respective surface 46.

As illustrated in Figure 2 and, more particularly, in Figure 4, each shaft 30 further includes an outer flange 48 fixed to the respective head 42 and each of the bodies 44 is fixed for rotation with the respective casing 7 by a respective angular locking device 49 comprising a pair of axial appendages 50 fixed to the body 44 on diametrally opposite sides of the respective shaft 30 and a fork 51 which is pivoted on the respective casing 7 so as to be pivotable about an axis perpendicular to the axes 7a towards and away from an operative position in which the arms of the fork 51 are disposed on opposite sides of a respective appendage 50.

The operation of the assembly 1 will now be described starting from the condition in which the units 6 are disengaged from the frame 2 and are arranged side by side with their surfaces 10 in contact with each other with the shafts 27 lying in respective angular positions such that their segments 24 are in their rest positions, and with the bodies 44 arranged with their surfaces 47 spaced from the surfaces 46, the shoulders 40a each being frictionally coupled to a respective ring 40 and the jaws 13 being arranged in their rest positions.

Starting from this condition, the units 6 are fitted into the cup-shaped body 3 so that their appendages 22 are brought into contact with the arms 15, then are forced towards the base 4 of the body 3 so that the force of the springs 21 is overcome and, consequently, the jaws 13 are pivoted into their operative positions, which reached, the surfaces 19 of the jaws 13 are forced against the surfaces 23 of the appendages 22 and the surfaces 10 are forced against each other.

At this point, the shafts 30 are rotated by means of their heads 42, each being turned in a clockwise sense as seen in Figures 1 and 3, and, as the shafts 27 and 30 are frictionally coupled together since the shoulders 40a cooperate frictionally with the respective rings 40 the rotation of the shafts 30 causes the devices 34 to snap-engage and the shafts 27 to be rotated by their respective shafts 30 so as to displace their respective segments 24 from their rest positions to their operative positions.

Once these operative positions are reached, the shafts 27 are held in fixed angular positions relative to the casings 7 by the respective devices 34 and thus, if the shafts 30 are rotated further, still in the clockwise sense as seen in Figures 1 and 3, it is possible first to overcome the angular constraint between the shoulders 40a and the rings 40 and, subsequently, to screw the portions 39 into the bores 38a so as to cause the translational movement of the shafts 27 and, consequently, the progressive forcing of the surfaces 25 of the segments 24 against the respective surfaces 17 of the jaws 13 with the resultant pressing of the base plates 8 of the unit 6 against the base 4 of the body 3. As the shafts 30 are rotated, since the portions 43 have left-hand threading, the surfaces 47 of the bodies 44 are forced simultaneously against the surfaces 46 of the casings 7 so that the upper ends thereof are also forced against each other.

The units 6 are disconnected from the frame 2 by means of the stages described above carried out in reverse. More particularly, the shafts 30 are rotated in the anticlockwise sense as seen in Figures 1 and 3 and this rotation first causes the force coupling between the surfaces 17 and 25 and between the surfaces 46 and 47 to be released and then causes the progressive disengagement of the portions 39 from the bores 38a, the movement of the portions 39 continuing until the shoulders 40a again bear against the respective rings 40. At this point, further rotation of the shafts 30, still in the anticlockwise sense as seen in Figures 1 and 3, causes the shoulders 40a to be pressed against the respective rings 40 again and frictional locking of the shafts 27 for rotation with the shafts 30. This new force coupling, still as a result of the rotation of the shafts 30 in the anticlockwise sense, makes the devices 34 snap again and returns the segments 24 to their rest positions.

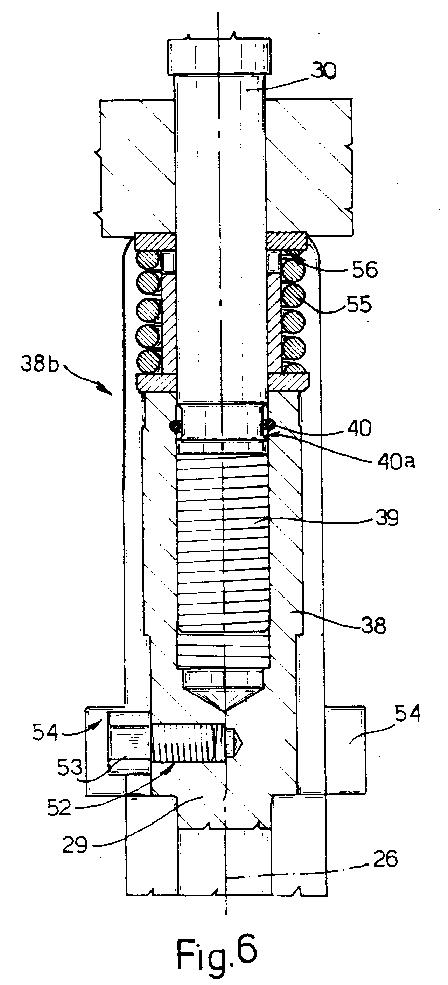

In the variant illustrated in Figure 6, the angular locking devices 34 are eliminated and replaced by simple pins 52. These latter are fixed each to a respective portion 38 in a position perpendicular to the respective axis 26 and each has a free end portion 53 which projects out of the respective portion 38 and is adapted to cooperate with respective angular stop abutments 54 spaced apart by substantially 180° to lock the respective segments 24 in their operative and rest positions.

Again in the variant illustrated in Figure 6, each of the devices 38b for interconnecting the shafts 27 and 30 also includes a compression spring 55 interposed between the end of the respective portion 38 and an abutment 56 formed on the respective casing 7.

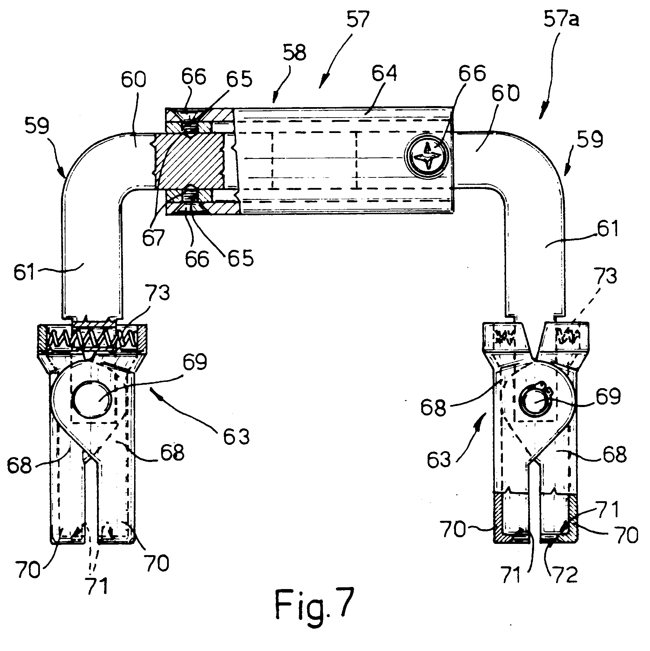

In both solutions described above, the movement of the units 6 relative to the cup-shaped body 3 is facilitated by the use of a withdrawal tool 57 (Figure 7) adapted for connection to the flanges 48 of the heads 42.

The tool 57 includes and U-shaped handgrip 57a which in turn comprises a central portion 58 and two L-shaped side portions 59 each having a first arm 60 and a second arm 61 of which the arm 61 carries an engagement device indicated 63 fixed to its own free end portion. The arms 60 are aligned with each other and connected together telescopically by means of a sleeve 64 which is partially engaged by end portions of the arms 60 and has two pairs of threaded holes 65 each engaged by a respective threaded pin 66 which extends through the wall of the sleeve 64 and into a selected one of a plurality of recesses 67 formed in the outer surface of the respective arm 60 in aligned positions.

Each engagement device 63 comprises a pair of brackets 68 pivoted together like pincers at their respective end portions by means of a pin 69 so as to be pivotable relative to each other between an open position and a closed position. More particularly, the brackets 68 have respective end parts 70 which are L-shaped in longitudinal section and together define an internal annular shoulder 71 which defines a circular aperture 72 which is outwardly flared and the diameter of which is variable in dependence on the relative positions of the brackets 68. More particularly, this diameter is smaller than the diameter of the flanges 48 when the brackets 68 are in their closed position and larger than the diameter of the flanges 48 when the brackets 68 are in their open position. In order to move the brackets 68 from their closed position to their open position the force of a respective reaction spring 73 interposed between the ends of the brackets 68 opposite those defining their aperture 72 must be overcome.

In use, the distance between the devices 63 is first adjusted so that it is substantially equal to the distance between the axes 26 and then the tool 57 is located with its devices 63 each in correspondence with a respective head 42 so as to bring each aperture 72 into a position coaxial with the respective axis 26; then the tool 57 is forced towards the casings 7 so that the end parts 70 defining the shoulders 71 are snapped over the respective flanges 48 the surfaces of which facing the respective casings 7 bear against the respective shoulders 71; at this point the tool 57 is engaged positively with the heads 42 and the units 6 may be moved manually with ease.

The tool 57 can be disengaged equally easily from the units 6 by the exertion of a manual force on the brackets 68, in correspondence with the springs 73 and opposing that of the springs 73 themselves, so as to move the brackets 68 into their open position.

From the above it will be clear that the connecting device 12 enables the casings 7 to be connected to the fixed frame 2 easily and in a very short period of time and for the casings 7 to be disengaged equally quickly from the frame 2 so as not to affect the production rhythm of the respective forming machine to a noticeable extent. Moreover, the device 12 is relatively simple from a constructional point of view, is extremely reliable over prolonged periods of time and relatively cheap both to manufacture and maintain.

Finally it is clear that modifications and variations may be made to the assembly 1 described above without thereby departing from the scope of protection of the present invention as defined by the appended claims. In particular, a single punch unit 6 may be provided and the various components of the connecting device 12 may have different shapes and geometries from those described. For example the jaws 13 need not be L-shaped and the drive device 28 for the segments 24 and the segments 24 themselves may be different from those described.

## Claims

1. A punch or plunger assembly (1) for a machine for shaping glass articles comprising a fixed support (2); at least one outer casing (7) having an axis (7a) and adapted to support a plunger (11) for movement relative to the outer casing (7) in a direction substantially parallel to the said axis (7a); and connecting means (12) for connecting the outer casing (7) releasably to the fixed support (2); characterised in that the connecting means (12) comprise gripper means (13) carried by one component selected from the fixed support (2) and the outer casing (7); counter means (24) for the gripper means (13) carried by the other component of the fixed support (2) and the outer casing (7), the counter means being movable between an operative position in which the counter means (24) cooperate with the gripper means (13) to connect the casing (7) to the fixed support (2) in a releasable manner and a rest position in which the counter means (24) are disengaged from the gripper means (13); and first drive means (28) for the counter means (24).

2. An assembly according to Claim 1, characterised in that the gripper means (13) are jaw means and are movable between an operative position, in which they cooperate with the counter means (24), and a rest position in which they are disengaged from the counter means (24); and second drive means (21) being provided to move the jaw means (13) between the rest and the operative positions.

3. An assembly according to Claim 1 or Claim 2 characterised in that the jaw means (13) include at least one pair of shoulders (17); the counter means (24) have at least one pair of abutment surfaces (24) each for cooperating with a respective shoulder (17), and the first drive means (28) are adapted to force the abutment surfaces (24) against the respective shoulders (17).

4. An assembly according to Claim 3, characterised in that the counter means comprise at least one pair of counter elements (24) each having a respective said abutment surface (25); the counter elements (24) being carried by the casing (7) and being rotatable relative to the casing (7) about respective first axes (26) between the said operative and rest positions.

5. An assembly according to Claim 4, characterised in that it includes angular locking means (49; 52) for retaining the counter elements releasably in the operative and rest positions.

6. An assembly according to Claim 4 or Claim 5, characterised in that the first drive means (28) comprise, for each of the counter elements (24), a first shaft (30) and a second shaft (27), the shafts being aligned with each other and coaxial with a respective said first axis (26), and coupling means (38) for connecting the shafts (27) (30) together, the first shaft (30) being coupled to the casing (7) so as to be rotatable about the first axis (26) and being operable from the outside, and the second shaft (27) being coupled to the casing (7) so as to be rotatable and axially slidable and carrying a respective said counter element (24) fixed thereto and being driven by the first shaft (30) through the coupling means (38b).

7. An assembly according to Claim 6, characterised in that coupling means (38b) comprise first screw means (38, 39) for moving the second shaft (27) axially relative to the first shaft (30) and to the casing (7).

8. An assembly according to Claim 7, characterised in that the first screw means (38, 39) comprise a first female thread (38) fixed to one of the said shafts (27) (30), and a first screw (39) carried by the other of the shafts (27) (30) and engaged with the first female thread (38).

9. An assembly according to one of Claims 6 to 8, characterised in that the coupling means (38b) further include first releasable angular connecting means (40, 40a) for connecting the shafts (27) (30) for rotation together in a releasable manner.

10. An assembly according to Claim 9, characterised in that the first angular connecting means comprise a frictional connecting device (40, 40a).

11. An assembly according to any one of Claims 6 to 10, characterised in that the coupling means (38b) further include first resilient means (55) interposed between the first shaft (30) and the second shaft (27).

12. An assembly according to Claim 8, characterised in that the first drive means (28) include second axial connecting means (43, 43a, 44) for connecting the first shaft (30) axially and in a releasable manner to the casing (7).

13. An assembly according to Claim 12, characterised in that the second connecting means (43, 43a, 44) comprise a screw connecting device which in turn comprises a second female thread (44) adapted to bear against a shoulder (46) carried by the casing (7), and a second screw (43) carried by the first shaft (30) and engaging the second female thread (44); the first screw (39) and the first female thread (38) having right-hand threading and the second screw (43) and the second female thread (44) having left-hand threading.

14. An assembly according to any one of Claims 4 to 13, characterised in that the gripper means comprise at least one pair of jaws (13) connected to the fixed support (2) so as to be pivotable about second axes (20) substantially perpendicular to the first axes (26).

15. An assembly according to Claims 2 and 14, characterised in that the second drive means comprise second resilant means (21) interposed between the fixed support (2) and the jaws (13).

16. An assembly according to any one of the preceding Claims, characterised in that it includes two of the said casings (7) located side by side and force means (13, 22) (44, 45) for clamping the casings (7) against each other.

17. An assembly according to Claim 16, characterised in that the force means (13, 22) (44, 45) comprise at least one pair of first inclined surfaces (19) carried by the gripper means (13) and at least one pair of second inclined surfaces (23) mating with the first inclined surfaces (19) and carried by the casings (7) for cooperating with the first inclined surfaces (19).

18. A tool (57) for moving at least one casing of the punch assembly (1) in accordance with any one of the preceding Claims, characterised in that it includes handgrip means (57a) and at least one pair of snap-engageable hook devices (63) carried by the handgrip means (57a); the hook devices (63) being adapted to snap engage each with a respective attachment element (48) carried by the at least one said casing (7).

19. A tool according to Claim 18, characterised in that the hook devices (63) each include a pair of brackets (68) pivoted together like pincers and pivotally attached to the handgrip means (57a) by means of a pin (69) and movable relative to each other between a closed position, in which the brackets (68) are adapted to couple positively with the respective attachment elements (48) and an open position in which the brackets (68) are adapted to disengage from the attachment elements (48); resilient means (73) being interposed between the brackets (68) to keep the brackets (68) themselves in the closed position.

## Patentansprüche

1. Stanz- oder Plungervorrichtung (1) für eine Glasartikel formende Maschine, die ein feststehendes Gestell (2), mindestens ein äußeres Gehäuse (7), das über eine Achse (7a) verfügt und zum Tragen eines Plungers (11) eingerichtet ist, der in bezug auf das äußere Gehäuse (7) in einer im wesentlichen zu der Drehachse (7a) parallelen Richtung bewegbar ist, und Verbindungsmittel (12) zum lösbaren Befestigen des äußeren Gehäuses (7) an dem feststehenden Gestell (2) aufweist, **dadurch gekennzeichnet,** daß die Verbindungsmittel (12) Halterungsvorrichtungen (13), die von einem aus dem feststehenden Gestell (2) und dem äußeren Gehäuse (7) auswählbaren Bauteil gestützt sind, Kontereinheiten (24) für die Halterungsvorrichtungen (13), die von dem anderen Bauteil des feststehenden Gestells (2) und des äußeren Gehäuses (7) gestützt sind, wobei die Kontereinheiten zwischen einer Betriebsstellung, in der die Kontereinheiten (24) mit den Halterungsvorrichtungen (13) zusammenwirken, um das Gehäuse (7) mit dem feststehenden Gestell (2) in einer lösbaren Art zu verbinden, und einer Ruhestellung bewegbar sind, in der die Kontereinheiten (24) ohne Eingriff mit den Halterungsvorrichtungen (13) sind, und erste Antriebseinheiten (28) für die Kontereinheiten (24) aufweisen.

2. Vorrichtung nach Anspruch 1, dadurch gekennzeichnet, daß die Halterungsvorrichtungen (13) Klemmvorrichtungen sind und zwischen einer Betriebsstellung, in der sie mit den Kontereinheiten (24) zusammenwirken, und einer Ruhestellung, in der sie ohne Eingriff mit den Kontereinheiten (24) sind, bewegbar sind, und zweite Antriebseinheiten (21) zum Bewegen der Klemmvorrichtungen (13) zwischen den Ruhe- und Betriebsstellungen vorgesehen sind.

3. Vorrichtung nach Anspruch 1 oder Anspruch 2, dadurch gekennzeichnet, daß die Klemmvorrichtungen (13) mindestens ein Paar von Schultern (17) umfassen, die Kontereinheiten (24) mindestens ein Paar von Auflaufflächen (24) aufweisen, von denen jede mit einer zugeordneten Schulter (17) zusammenwirkt, und die ersten Antriebseinheiten (28) zum Treiben der Auflaufflächen (24) gegen die jeweiligen Schultern (17) vorgesehen sind.

4. Vorrichtung nach Anspruch 3, dadurch gekennzeichnet, daß die Kontereinheiten mindestens ein Paar von Konterelementen (24) mit jeweils einer Auflauffläche (25) aufweisen, wobei die Konterelemente (24) durch das Gehäuse (7) gestützt und bezüglich des Gehäuses (7) um jeweilige erste Achsen (26) zwischen der Betriebs- und Ruhestellung drehbar sind.

5. Vorrichtung nach Anspruch 4, dadurch gekennzeichnet, daß sie Winkelsperrvorrichtungen (49, 52) zum lösbaren Halten der Konterelemente in den Betriebs- und Ruhestellungen aufweist.

6. Vorrichtung nach Anspruch 4 oder Anspruch 5, dadurch gekennzeichnet, daß die ersten Antriebseinheiten (28) für jedes der Konterelemente (24) eine erste Welle (30) und eine zweite Welle (27), wobei die Wellen zueinander ausgerichtet und gleichachsig mit einer zugeordneten ersten Achse (26) sind, und Kupplungseinheiten (38) zum Verbinden der Wellen (27, 30) miteinander aufweisen, wobei die erste Welle (30) derart an dem Gehäuse (7) befestigt ist, daß sie um die erste Achse (26) drehbar und von außen steuerbar ist, und die zweite Welle (27) derart an dem Gehäuse (7) befestigt ist, daß sie drehbar, axial verschiebbar und ein zugeordnetes, an ihr befestigtes Konterelement (24) trägt und von der ersten Welle (30) über Kupplungseinheiten (38b) antreibar ist.

7. Vorrichtung nach Anspruch 6, dadurch gekennzeichnet, daß die Kupplungseinheiten (38b) erste Schraubvorrichtungen (38, 39) zum axialen Bewegen der zweiten Welle (27) in bezug auf die erste Welle (30) und auf das Gehäuse (7) aufweisen.

8. Vorrichtung nach Anspruch 7, dadurch gekennzeichnet, daß die ersten Schraubvorrichtungen (38, 39) ein an einer der Wellen (27, 30) befestigtes erstes Innengewinde (38) und eine erste Schraube (39), die durch die andere der Wellen (27) (30) gestützt ist und mit dem ersten Innengewinde (38) in Eingriff steht, aufweisen.

9. Vorrichtung nach einem der Ansprüche 6 bis 8, dadurch gekennzeichnet, daß die Kupplungseinheiten (38b) weiterhin lösbare erste Drehwinkelverbindungsmittel (40, 40a) aufweisen, um die Wellen (27) (30) zum Drehen in einer lösbaren Art miteinander zu verbinden.

10. Vorrichtung nach Anspruch 9, dadurch gekennzeichnet, daß die ersten Drehwinkelverbindungsmittel eine Reibverbindungseinheit (40, 40a) aufweisen.

11. Vorrichtung nach einem der Ansprüche 6 bis 10, dadurch gekennzeichnet, daß die Kupplungseinheiten (38b) weiterhin zwischen der ersten Welle (30) und der zweiten Welle (27) angeordnete erste Federvorrichtungen (55) aufweisen.

12. Vorrichtung nach Anspruch 8, dadurch gekennzeichnet, daß die ersten Antriebseinheiten (28) zweite axiale Verbindungsmittel (43, 43a, 44) zum axialen und lösbaren Verbinden der ersten Welle (30) mit dem Gehäuse (7) aufweisen.

13. Vorrichtung nach Anspruch 12, dadurch gekennzeichnet, daß die zweiten Verbindungsmittel (43, 43a, 44) ein Schraubverbindungsmittel aufweisen, das der Reihe nach ein zum Drücken gegen eine von dem Gehäuse (7) getragene Schulter (46) vorgesehenes zweites Innengewinde (44) und eine durch die erste Welle (30) getragene und in das zweite Innengewinde (44) eingreifende zweite Schraube (43) umfaßt, wobei die erste Schraube (39) und das Innengewinde (38) ein Rechtsgewinde und die zweite Schraube (43) und das zweite Innengewinde (44) ein Linksgewinde aufweisen.

14. Vorrichtung nach einem der Ansprüche 4 bis 13, dadurch gekennzeichnet, daß die Halterungsvorrichtungen mindestens ein Paar von Klemmvorrichtungen (13) aufweisen, die derart an dem feststehenden Gestell (2) befestigt sind, daß sie um im wesentlichen rechtwinklig zu der ersten Achse (26) verlaufende zweite Achsen (20) schwenkbar sind.

15. Vorrichtung nach den Ansprüchen 2 und 14, dadurch gekennzeichnet, daß die zweiten Antriebseinheiten zwischen dem feststehenden Gestell (2) und den Klemmvorrichtungen (13) angeordnete zweite Federvorrichtungen (21) aufweisen.

16. Vorrichtung nach einem der vorhergehenden Ansprüche, dadurch gekennzeichnet, daß sie zwei der genannten Gehäuse (7) aufweist, die nebeneinander angeordnet sind, und Haltemittel (13, 22) (44, 45) zum Verklemmen der Gehäuse (7) miteinander vorgesehen sind.

17. Vorrichtung nach Anspruch 16, dadurch gekennzeichnet, daß die Haltemittel (13, 22, 44, 45) mindestens ein Paar erster angeschrägter Oberflächen (19), die von den Halterungsvorrichtungen (13) getragen sind, und mindestens ein Paar zweiter angeschrägter Oberflächen (23), die an die ersten angeschrägten Oberflächen (19) angepaßt sind und die durch die Gehäuse (7) zum Zusammenwirken mit den ersten angeschrägten Oberflächen (19) gestützt sind, aufweisen.

18. Werkzeug (57) zum Bewegen mindestens eines Gehäuses der Stanzvorrichtung (1) gemäß einem der vorhergehenden Ansprüche, dadurch gekennzeichnet, daß es Handgriffvorrichtungen (57a) und mindestens ein Paar von durch die Handgriffvorrichtungen (57a) getragene schnappende, eingreifbare Hakeneinheiten (63) aufweist, wobei jede der Hakeneinheiten (63) zum Einschnappen in ein zugeordnetes, auf mindestens einem der genannten Gehäuse (7) angeordneten Befestigungselement (48) vorgesehen ist.

19. Werkzeug nach Anspruch 18, dadurch gekennzeichnet, daß jede der Hakeneinheiten (63) ein Paar von Trageteilen (68) aufweist, die gelenkig, zangenartig miteinander verbunden und drehbar an den Handgriffvorrichtungen (57a) durch Stiftvorrichtungen (69) befestigt sind und relativ zueinander zwischen einer geschlossenen Stellung, in der die Trageteile (68) zum formschlüssigen Kuppeln mit den jeweiligen Befestigungselementen (48) bestimmt sind, und einer geöffneten Stellung, in der die Trageteile (68) zum Lösen von den Befestigungselementen (48) vorgesehen sind, bewegbar sind, wobei Federvorrichtungen (73) zwischen den Trageteilen (68) angeordnet sind, um die Trageteile (68) selbst in der geschlossenen Stellung zu halten.

## Revendications

1. Agencement de poinçon ou de piston (1) pour une machine de façonnage d'articles en verre, comprenant un support fixe (2); au moins un carter extérieur (7), ayant un axe (7a) et adapté de façon à supporter un piston (11) en lui permettant de se déplacer par rapport au carter extérieur (7) dans une direction sensiblement parallèle audit axe (7a); et des moyens de liaison (12) reliant le carter extérieur (7) de manière amovible au support fixe (2); caractérisé par le fait que les moyens de liaison (12) comprennent des moyens de préhension (13) supportés par un composant sélectionné parmi le support fixe (2) et le carter extérieur (7); des contre-moyens (24) destinés aux moyens de préhension (13) supportés par l'autre composant parmi le support fixe (2) et le carter extérieur (7), les contre-moyens étant déplaçables entre une position de fonctionnement, dans laquelle les contre-moyens (24) coopèrent avec les moyens de préhension (13) afin de relier le carter (7) de manière amovible au support fixe (2), et une position de repos, dans laquelle les contre-moyens (24) sont désolidarisés des moyens de préhension (13); et des premiers moyens d'entraînement (28) destinés aux contre-moyens (24).

2. Agencement selon la revendication 1, caractérisé par le fait que les moyens de préhension (13) sont des moyens formant mâchoire de serrage et sont déplaçables entre une position de fonctionnement, dans laquelle ils coopèrent avec les contre-moyens (24), et une position de repos, dans laquelle ils sont désolidarisés des contre-moyens (24); et des deuxièmes moyens d'entraînement (21) étant prévus, afin de déplacer les moyens formant mâchoire de serrage (13) entre les positions de repos et de fonctionnement.

3. Agencement selon la revendication 1 ou 2, caractérisé par le fait que les moyens formant mâchoire de serrage (13) comprennent au moins un couple d'épaulements (17); les contre-moyens (24) présentent au moins un couple de surfaces de butée (24), destinées chacune à coopérer avec un épaulement (17) respectif, et les premiers moyens d'entraînement (28) sont adaptés de façon à forcer les surfaces de butée (24) à venir contre les épaulements (17) respectifs.

4. Agencement selon la revendication 3, caractérisé par le fait que les contre-moyens comprennent au moins un couple de contre-éléments (24) ayant chacun une dite surface de butée (25) respective, les contre-éléments (24) étant supportés par le carter (7) et pouvant tourner par rapport au carter (7) autour de premiers axes (26) respectifs, entre lesdites positions de fonctionnement et de repos.

5. Agencement selon la revendication 4, caractérisé par le fait de comprendre des moyens de verrouillage angulaire (49; 52) servant à maintenir les contre-éléments de manière amovible dans les positions de fonctionnement et de repos.

6. Agencement selon la revendication 4 ou 5, caractérisé par le fait que les premiers moyens d'entraînement (28) comprennent, pour chacun des contre-éléments (24), un premier arbre (30) et un deuxième arbre (27), les arbres étant alignés entre eux et coaxiaux par rapport à un dit premier axe (26) respectif, et des moyens de couplage (38) reliant les arbres (27, 30) ensemble, le premier arbre (30) étant couplé au carter (7) de manière à pouvoir tourner autour du premier axe (26) et étant actionnable depuis l'extérieur, et le deuxième arbre (27) étant couplé au carter (7) de manière à pouvoir tourner et à pouvoir coulisser axialement et supportant un dit contre-élément (27) respectif qui y est fixé et entraîné par le premier arbre (30) via les moyens de couplage (38b).

7. Agencement selon la revendication 6, caractérisé par le fait que les moyens de couplage (38b) comprennent des premiers moyens filetés (38, 39) déplaçant le deuxième arbre (27) axialement par rapport au premier arbre (30) et au carter (7).

8. Agencement selon la revendication 7, caractérisé par le fait que les premiers moyens filetés (38, 39) comprennent un premier taraudage (38), fixé à l'un desdits arbres (27, 30), et une première vis (39) supportée par l'autre arbre parmi les arbres (27, 30) et en prise avec le premier taraudage (38).

9. Agencement selon l'une des revendications 6 à 8, caractérisé par le fait que les moyens de couplage (38b) comprennent en outre des premiers moyens de liaison angulaire (40, 40a) amovibles pour relier les arbres (27, 30) afin de les faire tourner ensemble, avec possibilité de désolidarisation.

10. Agencement selon la revendication 9, caractérisé par le fait que les premiers moyens de liaison angulaire comprennent un dispositif de liaison à friction (40, 40a).

11. Agencement selon l'une quelconque des revendications 6 à 10, caractérisé par le fait que les moyens de couplage (38b) comprennent en outre des premiers moyens élastiques (55) disposés entre le premier arbre (30) et le deuxième arbre (27).

12. Agencement selon la revendication 8, caractérisé par le fait que les premiers moyens d'entraînement (28) comprennent des deuxièmes moyens de liaison axiale (43, 43a, 44) reliant le premier arbre (30) axialement et de manière amovible au carter (7).

13. Agencement selon la revendication 12, caractérisé par le fait que les deuxièmes moyens de liaison (43, 43a, 44) comprennent un dispositif de liaison par vis comportant à son tour un deuxième taraudage (44) adapté de façon à porter contre un épaulement (46) supporté par le carter (7), et une deuxième vis (43) supportée par le premier arbre (30) et s'engageant contre le deuxième taraudage (44); la première vis (39) et le premier taraudage (38) ayant un filetage à droite et la deuxième vis (43) et le deuxième taraudage (44) ayant un filetage orienté à gauche.

14. Agencement selon l'une quelconque des revendications 4 à 13, caractérisé par le fait que les moyens de préhension comprennent au moins un couple de mâchoires de serrage (13) reliées au support fixe (2), de manière à pouvoir pivoter autour de deuxièmes axes (20), sensiblement perpendiculairement par rapport aux premiers axes (26).

15. Agencement selon les revendications 2 et 14, caractérisé par le fait que les deuxièmes moyens d'entraînement comprennent des deuxièmes moyens élastiques (21) disposés entre le support fixe (2) et les mâchoires de serrage (13).

16. Agencement selon l'une quelconque des revendications précédentes, caractérisé par le fait qu'il comprend deux desdits carters (7) disposés côte à côte et des moyens de force (13, 22) (44, 45) pour serrer les carters (7) l'un contre l'autre.

17. Agencement selon la revendication 16, caractérisé par le fait que les moyens de force (13, 22) (44, 45) comprennent au moins un couple de premières surfaces (19) inclinées, supportées par les moyens de préhension (13), et au moins un couple de deuxièmes surfaces (23) inclinées, adaptées aux premières surfaces (19) inclinées et supportées par les carters (7), afin de coopérer avec les premières surfaces (19) inclinées.

18. Outil (57) servant a déplacer au moins un carter de l'agencement de poinçon (1) selon l'une quelconque des revendications précédentes, caractérisé par le fait de comprendre des moyens formant poignée (57a) et au moins un couple de dispositifs d'accrochage (63) pouvant s'engager par encliquetage, supportés par les moyens formant poignée (57a); les dispositifs d'accrochage (63) étant adaptés de façon à s'engager chacun par encliquetage avec un élément de fixation (48) respectif supporté par le au moins un dit carter (7).

19. Outil selon la revendication 18, caractérisé par le fait que les dispositifs d'accrochage (63) comprennent chacun un couple de supports (68) montés ensemble pivotants à la façon de pinces et fixés à pivotement aux moyens formant poignée (57a), au moyen d'un tige (69), et déplaçables les uns par rapport aux autres entre une position fermée, dans laquelle les supports (68) sont adaptés de façon à se coupler positivement aux éléments de fixation (48) respectifs, et une position ouverte, dans laquelle les supports (68) sont adaptés de façon à se désolidariser des éléments de fixation (48); des moyens élastiques (73) étant disposés entre les supports (68) afin de maintenir les supports (68) eux-mêmes dans la position fermée.
